# EUROPÄISCHE PATENTSCHRIFT

(11) **EP 1 177 264 B1**
(45) Veröffentlichungstag und Bekanntmachung des Hinweises auf die Patenterteilung: **18.12.2002**
(21) Anmeldenummer: 00920710.1
(22) Anmeldetag: 14.04.2000
(51) Int. Cl.: C09D 183/08, C09D 183/14, C09D 201/04

(54) **VERFAHREN ZUR HERSTELLUNG VON ÜBERZÜGEN AUF BASIS FLUORHALTIGER KONDENSATE**
METHOD FOR PRODUCING COATINGS BASED ON CONDENSATES CONTAINING FLUORINE
PROCEDE DE PRODUCTION DE REVETEMENTS A BASE DE CONDENSATS CONTENANT DU FLUOR

(30) Priorität: 16.04.1999 DE 19917367
(43) Veröffentlichungstag der Anmeldung: 06.02.2002
(73) Patentinhaber: INSTITUT FÜR NEUE MATERIALIEN GEM. GMBH, 66123 Saarbrücken (DE)
(72) Erfinder: ARPAC, Ertugrul, PK 510, 07200 Antalya (TR); GROSS, Frank, D-66119 Saarbrücken (DE); SEPEUR, Stefan, D-66787 Wadgassen-Schaffhausen (DE); SCHMIDT, Helmut, D-66130 Saarbrücken-Güdingen (DE)
(74) Vertreter: Barz, Peter
(86) Internationale Anmeldenummer: EP0003427
(87) Internationale Veröffentlichungsnummer: WO00063312

(56) Entgegenhaltungen:
- EP-A- 0 768 352
- EP-A- 0 775 497
- DE-A- 4 118 184
- DE-A- 19 544 763

## Beschreibung

Die vorliegende Erfindung betrifft ein Verfahren zur Herstellung von Überzügen auf Basis fluorhaltiger Kondensate.

Die Beschichtung von Substraten mit Zusammensetzungen, die perfluorierte Kohlenwasserstoffketten aufweisen, ist meist sehr aulwendig und kann meist nur in Spezialbetrieben mit geeigneten Lackiervorrichtungen durchgeführt werden, da z.B. sehr hohe Temperaturen oder spezielle UV-Bestrahlungen zur Härtung notwendig sind. Gerade zur Nachbehandlung oder Pflege von Oberflächen, wie z.B. Autolacken, ist jedoch eine einfache Anwendung ohne Einsatz spezieller Geräte erwünscht.

In der JP-A-10036821 werden Mischungen aus Fluoralkylalkoxysilanen, speziellen Aminoalkylsiloxanen, organischen Lösungsmitteln und Säuren beschrieben, die damit behandelten Glasscheiben wasser- und hexanabweisende Eigenschaften verleihen.

In der EP-A-799873 sind hydrophobe und oleophobe Beschichtungen beschrieben, die durch Beschichten von Glassubstraten mit Lösungen von fluorhaltigen Alkoxysilanen in Gemischen aus organischen Lösungsmitteln, Säuren und Wasser erhalten werden.

Bei den vorstehend genannten Beschichtungssystemen handelt es sich um Beschichtungen mit sogenanntem "Easy-to-clean-Effekt", auf denen Schmutzkomponenten entweder nicht haften oder aber im Falle der Ablagerung wieder sehr leicht entfernt werden können. Die Haftungseigenschaften der so hergestellten Filme auf dem Substrat sind jedoch begrenzt, so daß bei Verwendung von Filmen mit geringer Schichtdicke bereits nach kurzer Zeit, etwa infolge von Bewitterung oder Reinigungsmaßnahmen, eine Abnutzung des Films erfolgt. Ferner ist es bei den oben genannten Beschichtungssystemen notwendig, daß polare Oberflächen-Haftgruppen wie Hydroxylgruppen auf dem Substrat vorhanden sind, um überhaupt eine annehmbare Haftung zu erzielen.

Aufgabe der vorliegenden Erfindung ist daher die Bereitstellung eines Verfahrens, das es ermöglicht, Oberflächen auf einfache Weise ohne Einsatz spezieller Vorrichtungen einen dauerhafteren "Easy-to-Clean"-Effekt zu verleihen bzw. Oberflächen mit verbrauchtem "Easy-to-clean-Effekt" zu regenerieren.

Gegenstand der Erfindung ist ein Verfahren zur Herstellung von Überzügen auf Basis von fluorhaltigen Kondensaten, bei dem man ein Überzugsmittet enthaltend
a) 0,001 bis 100 Gew.% eines Polykondensats von einer oder mehreren hydrolysierbaren Verbindungen mindestens eines Elements M, ausgewählt aus den Hauptgruppen III bis V und/oder den Nebengruppen II bis IV des Periodensystems der Elemente, wobei zumindest ein Teil dieser Verbindungen neben hydrolysierbaren Gruppen A auch nicht hydrolysierbare kohlenstoffhaltige Gruppen B aufweist und das Gesamt-Molverhältnis von Gruppen A zu Gruppen B in den zugrundeliegenden monomeren Ausgangsverbindungen 100:1 bis 1:2 beträgt, wobei 0,1 bis 100 Mol-% der Gruppen B Gruppen B' sind, die durchschnittlich 5 bis 30 Fluoratome aufweisen, die an ein oder mehrere aliphatische Kohlenstoffatome gebunden sind, welche durch mindestens zwei Atome von M getrennt sind; und
b) 0 bis 99,999 Gew.% eines Trägermediums von flüssiger bis wachsartiger Konsistenz
auf ein Substrat aufträgt und bei Umgebungstemperatur (unter 40°C) unter Bildung eines Überzugs mit einer Trockenschichtdicke von nicht mehr als 600 nm trocknet bzw. härtet.

Als erfindungsgemäß einsetzbare Polykondensate eignen sich insbesondere die in der WO 92/21729 beschriebenen fluorhaltigen Polykondensate. Es wird daher hiermit ausdrücklich auf die in dieser Druckschrift beschriebenen Polykondensate und deren Herstellung Bezug genommen. Bevorzugt werden die fluorierten Ausgangsverbindungen aber nicht, wie dort beschrieben, nach der Bildung von Vorkondensaten aus nicht-fluorierten Ausgangsverbindungen zugegeben, sondern die Ausgangsverbindungen werden bevorzugt gemeinsam hydrolysiert und kondensiert.

Bei den zur Herstellung der Zusammensetzung verwendeten hydrolysierbaren Ausgangsverbindungen mindestens eines Elementes M aus den Hauptgruppen III bis V und/oder den Nebengruppen II bis IV des Periodensystems der Elemente handelt es sich vorzugsweise um solche von Si, Al, B, Pb, Sn, Ti, Zr, V oder Zn, insbesondere solche von Si, Al, Ti oder Zr, oder Mischungen aus zwei oder mehreren dieser Elemente. Hierzu sei angemerkt, daß selbstverständlich auch andere hydrolysierbare Verbindungen eingesetzt werden können, insbesondere solche von Elementen der Hauptgruppen I und II des Periodensystems (z.B. Na, K, Ca und Mg) und der Nebengruppen V bis VIII des Periodensystems (z.B. Mn, Cr, Fe und Ni). Auch hydrolysierbare Verbindungen der Lanthaniden können eingesetzt werden. Vorzugsweise machen die soeben genannten Verbindungen aber nicht mehr als 20 und insbesondere nicht mehr als 10 Mol-% der insgesamt eingesetzten hydrolysierbaren monomeren Verbindungen aus. Bei Einsatz hochreaktiver hydrolysierbarer Verbindungen (z.B. Aluminumverbindungen) empfiehlt sich die Verwendung von Komplexbildnem, die eine spontane Ausfällung der entsprechenden Hydrolysate nach Zugabe von Wasser verhindern. In der WO 92/21729 sind geeignete Komplexbildner genannt, die bei reaktiven hydrolysierbaren Verbindungen eingesetzt werden können.

Für Beispiele für hydrolysierbare Gruppen A in den Ausgangsverbindungen (die nicht notwendigerweise als monomere Verbindungen, sondern bereits als entsprechende Vorkondensate von Verbindungen eines oder mehrerer der Elemente M eingesetzt werden können) und für nicht-hydrolysierbare Gruppen B bzw. B' wird auf die oben genannte WO 92/21729 verwiesen.

Besonders bevorzugte nicht hydrolysierbare Gruppen B sind neben den in der WO 92/21729 genannten, die über mindestens eine ungesättigte, polymerisierbare Gruppe verfügen, auch solche, die mindestens eine andere funktionelle Gruppe aufweisen, über die eine Vernetzung der Kondensate möglich ist. Bei diesen funktionellen Gruppen kann es sich beispielsweise um Hydroxy, Epoxy- oder gegebenenfalls substituierte Aminogruppen handeln. Bevorzugt sind dabei Epoxygruppen, insbesondere Glycidyloxy-C₁₋₄-Alkylgruppen wie Glycidyloxypropyl. Als Gruppen, die ungesättigte Kohlenstoff-Kohlenstoff-Bindungen enthalten, seien Gruppen genannt, die über ein (Meth)acryloxyrest, insbesondere über einen (Meth)acryloxy-C₁₋₄-Alkylrest wie (Meth)acryloxypropyl, verfügen.

Erfindungsgemäß wird demnach bevorzugt, wenn 1 bis 100, insbesondere 5 bis 85 und besonders bevorzugt 20 bis 70 Mol-% der Gruppen B (inklusive der Gruppen B') mindestens eine ungesättigte, polymerisierbare Gruppe (z.B. C-C-Doppel- oder Deifachbindung) und/oder mindestens eine andere funktionelle Gruppe aufweisen, über die eine Vernetzung der Kondensate möglich ist

Erfindungsgemäß wird es bevorzugt, wenn das Gesamtmolverhältnis von Gruppen A zu Gruppen B in allen Ausgangsverbindungen (einschließlich der fluorierten) 100:1 bis 1:2, bevorzugt 50:1 bis 1:1 und insbesondere 10:1 bis 2:1 beträgt. Dabei ist zu berücksichtigen, daß sich dieses Verhältnis auf monomere Ausgangsverbindungen bezieht, d.h. bei eingesetzten Vorkondensaten entsprechend umgerechnet werden muß.

Spezielle Beispiele für nicht-fluorierte und fluorierte hydrolysierbare Verbindungen sind in der WO 92/21729 genannt Insbesondere die erfindungsgemäß einsetzbaren Siliciumverbindungen lassen sich ganz oder teilweise in Form von Vorkondensaten einsetzen, d.h. Verbindungen, die durch teilweise Hydrolyse der entsprechenden monomeren Verbindungen, entweder allein oder im Gemisch mit hydrolysierbaren Verbindungen anderer Elemente entstanden sind.

In den erfindungsgemäß eingesetzten Polykondensaten können alle, zumindest jedoch 0,1 Mol-% der an die Elemente M gebundenen nicht-hydrolysierbaren Gruppen B Gruppen B' sein, die im Durchschnitt 5 bis 30 Fluoratome aufweisen, welche an ein oder mehrere aliphatische (einschließlich cycloaliphatische) Kohlenstoffatome gebunden sind, die durch mindestens zwei Atome von M getrennt sind. Vorzugsweise sind 1 bis 100 Mol-% und insbesondere 5 bis 100 Mol-% der Gruppen B Gruppen B', wobei ein besonders bevorzugter Prozentsatz im Bereich von 10 bis 100 Mol-% liegt.

Vorzugsweise enthalten die Gruppen B' im Durchschnitt 5 bis 25 und insbesondere 8 bis 18 Fluoratome, die an aliphatische Kohlenstoffatome gebunden sind, wobei diejenigen Fluoratome nicht berücksichtigt sind, die gegebenenfalls in anderer Weise, z.B. an aromatische Kohlenstoffatome, gebunden sind (z.B. im Falle von C₆F₄). Bei der fluorhaltigen Gruppe B' kann es sich auch um einen Chelatliganden handeln. Ebenso ist es möglich, daß sich ein oder mehrere Fluoratome an einem Kohlenstoffatom befinden, von dem eine Doppel- oder Dreitachbindung ausgeht. Da die Gruppe B' nur im Durchschnitt 5 entsprechende Fluoratome aufweisen müssen, können auch Gruppen B' eingesetzt werden, die über nur 1 Fluoratom verfügen, wenn gleichzeitig genügend Gruppen B' vorhanden sind, die mehr als 5 Fluoratome aufweisen.

Insbesondere wenn sich unter den Gruppen B in den Kondensaten des Überzugsmittels solche mit ungesättigten Kohlenstoff-Kohlenstoff-Bindungen oder ebenfalls zur Vernetzung der Kondensate geeigneten funktionellen Gruppen befinden, kann das erfindungsgemäß eingesetzte Überzugsmittel auch einen Vemetzungsinitiator enthalten, der bereits bei Temperaturen unter 40°C und ohne Einsatz besonderer Belichtungsgeräte wirksam sein sollte. Beispiele für derartige Vemetzungsinitiatoren sind Irgacure® (Ciba Geigy) und Cyracure® (Union Carbide), die bereits vom UV-Anteil der natürlichen Umgebungslichts aktiviert werden können.

Die Herstellung des Polykondensats erfolgt in der auf diesem Gebiet üblichen Art und Weise. Werden am Anfang überwiegend (bei der Hydrolyse relativ reaktionsträge) Siliciumverbindungen eingesetzt, kann die Hydrolyse in den meisten Fällen dadurch erfolgen, daß man der oder den zu hydrolysierenden Siliciumverbindungen, die entweder als solche oder gelöst in einem geeigneten Lösungsmittel vorliegen , Wasser bei Raumtemperatur oder unter leichter Kühlung direkt zugibt (vorzugsweise unter Rühren) und die resultierende Mischung daraufhin einige Zeit (einige Minuten bis einige Stunden) rührt. Bei Anwesenheit der reaktiveren Verbindungen von z.B. Al, Ti und Zr empfiehlt sich in der Regel eine stufenweise Zugabe des Wassers. Unabhängig von der Reaktivität der anwesenden Verbindungen erfolgt die Hydrolyse im allgemeinen bei einer Temperatur nicht über 50°C, vorzugsweise zwischen 0°C und 30°C. Insbesondere bei den weniger reaktiven hydrolysierbaren Ausgangsverbindungen können auch Kondensationskatalysatoren eingesetzt werden. Dabei handelt es sich z.B. um Basen oder bevorzugt um Säuren.

Bevorzugt wird bei der Hydrolyse und Kondensation der hydrolysierbaren Verbindungen kein Lösungsmittel eingesetzt, insbesondere dann, wenn es sich bei den hydrolysierbaren Gruppen A um solche handelt, die bei der Hydrolyse zur Bildung von (niederen) Alkoholen, wie z.B. Methanol, Ethanol, Propanol und Butanol führen. Andernfalls (z.B. bei Verwendung von Halogensilanen) sind geeignete Lösungsmittel z.B. die soeben genannten Alkohole sowie Ether, vorzugsweise niedere Dialkylether wie Diethylether und Dibutylether und THF, aromatische Kohlenwasserstoffe (z.B. Toluol), Ester wie Essigsäureethylester, und insbesondere Butoxyethanol. Selbstverständlich kann ein Lösungsmittel auch eingesetzt werden, wenn die Hydrolyse ausschließlich zu (niederen) Alkoholen als Nebenprodukt führt.

Um einen genügend hohen Kondensationsgrad zu erreichen, wird aber zur Hydrolyse und Kondensation der hydrolysierbaren Verbindungen insgesamt so gearbeitet, daß in der die hydrolysierbaren Verbindungen enthaltende Mischung zur Herstellung der Polykondensate bevorzugt höchstens 50 Gew.-%, besonders bevorzugt höchstens 30 Gew.-%, Lösungsmittel enthalten sind.

Bezüglich der insgesamt für die Hydrolyse zu verwendenden Wassermenge sei bemerkt, daß es besonders bevorzugt ist, wenn das Molverhältnis von gesamtem zugegebenem Wasser zu hydrolysierbaren Gruppen A in allen eingesetzten Ausgangsverbindungen im Bereich von 1:1 bis 0,3:1, insbesondere 0,7:1 bis 0,5:1 liegt. Neben den üblichen Verfahren kann auch das spezielle, in der WO 92/21729 beschriebene Verfahren angewandt werden.

Insbesondere wenn die Gruppen B bzw. B' mindestens eine Kohlenstoff-Kohlenstoff-Doppel- oder Dreifachbindung und/oder mindestens eine andere funktionelle Gruppe aufweisen, über die eine Vernetzung der Kondensate möglich ist, ist es zweckmäßig, daß auch ein oder mehrere organische Verbindungen mit mindestens einer Kohlenstoff-Kohlenstoff-Doppel- oder Dreifachbindung und/oder mindestens einer funktionellen Gruppe, über die eine Vernetzung der Kondensate möglich ist, in der Zusammensetzung enthalten sind. Diese organischen Verbindungen können in Mengen im Bereich von 0 bis 20 Gew.%, bezogen auf die hydrolysierbaren Verbindungen, eingesetzt werden. Beispiele für derartige organische Verbindungen sind Verbindungen mit Acryloxy-, Methacryloxy-, Glycidyloxy-, Epoxid-, Hydroxyl- und/oder Aminogruppe. Die organische Verbindung weist bevorzugt ein oder zwei derartige Gruppen auf. Selbstverständlich werden die entsprechenden Gruppen der Gruppen B bzw. B' und der organischen Verbindung bevorzugt so gewählt, daß eine Reaktion zwischen ihnen möglich ist, beispielsweise unter den Bedingungen der Herstellung der erfindungsgemäßen Überzüge. Durch Verwendung solcher organischen Verbindungen ist häufig eine noch bessere Haftung des Überzugs auf dem Substrat möglich.

Beispiele für organische Verbindungen, die eingesetzt werden können, wenn die Gruppen B bzw. B' mindestens eine Kohlenstoff-Kohlenstoff-Doppel- oder Dreifachbindung enthalten, sind Styrol, Acrylsäure, Methacrylsäure und deren Derivate (z. B. Ester, Amide, Nitrile). Diese organischen Verbindungen können zusätzlich weitere funktionelle Gruppen, beispielsweise OH-Gruppen tragen. Beispiele für organische Verbindungen, die eingesetzt werden können, wenn die Gruppen B bzw. B' mindestens eine funktionelle Gruppe aufweisen, über die eine Vemetzung der Kondensate möglich sind, sind zum Beispiel aliphatische Diepoxide mit 5 bis 30 Kohlenstoffatomen oder cycloaliphatjsche oder aromatische Diepoxide mit 10 bis 40 Kohlenstoffatomen.

Die organische Verbindung kann bei der Herstellung des Polykondensats zu den Ausgangsverbindungen der hydrolysierbaren Verbindungen gegeben werden.

Bevorzugt wird die organische Verbindung aber erst nach Vorhydrolyse der hydrolysierbaren Verbindungen zugegeben. Die organische Verbindung kann in der Zusammensetzung an das Kondensat gebunden oder in ungebundener Form vorliegen.

Das vorzugsweise eingesetzte Trägermedium ist von flüssiger bis wachsartiger Konsistenz. Es kann sich dabei z.B. um ein oder mehrere Lösungsmittel, Öle, Cremes, Salben, Pasten und/oder Wachse oder Mischungen davon handeln. Das Überzugsmittel enthält das Polykondensat bevorzugt in verdünnter Form, wobei das Polykondensat in dem Trägermedium, das als Matrix dient, dispergiert wird.

Beispiele für einsetzbare Lösungsmittel sind Wasser und organische Lösungsmittel. Als organische Lösungsmittel eignen sich sowohl polare als auch unpolare und aprotische Lösungsmittel. Beispiele hierfür sind Alkohole, wie z.B. aliphatische Alkohole mit 1 bis 6 Kohlenstoffatomen (insbesondere Methanol, Ethanol, n- und i-Propanol und Butanol); Diole, wie Ethylenglycol oder Propylenglycol, Ketone, wie z.B. Aceton und Butanon; Ester, wie z.B. Essigsäureethylester; Ether, wie z.B. Ether der oben genannten Alkohole, wie Diethylether, cyclische Ether, wie Tetrahydrofuran und Tetrahydropyran, oder Monooder Diether von Diolen; Kohlenwasserstoffe mit 4 bis 20 Kohlenstoffatomen, wie z.B. Pentan, Hexan und Cyclohexan und aromatische Kohlenwasserstoffe mit 6 bis 20 Kohlenstoffatomen. Selbstverständlich können auch Mischungen derartiger Lösungsmittel eingesetzt werden.

Bevorzugt eingesetzte Lösungsmittel sind Wasser, die oben genannten Alkohole, Toluol, Essigester, THF, Glycolsäurebutylester, Butoxyethanol, Ethylenglycolmono- und - diethylether und Mischungen derselben.

Beispiele für verwendbare Öle sind Mineralöle aus Erdöl, synthetische Öle wie z.B. Silikonöl, und tierische oder pflanzliche Öle, z.B. Mandelöl oder Palmöl.

Bei den Cremes, Salben, Pasten und Wachsen handelt es sich um die auf diesem Fachgebiet üblicherweise eingesetzten Gele, z.B. um Kohlenwasserstoffgele, wie Vaseline; Lipogele, wie Wachse und Fette; Hydrogele, wie anorganische Hydrogele (Aerosil, Bentonit) und organische Hydrogele (Stärke); Polyethylenglycolgele und Silicongele. Es können auch Dispersionen von Wachsen oder Kunststoffen verwendet werden.

Bei dem Trägermedium handelt es sich bevorzugt um ein Wachs oder um eine Paste. Hierfür können beispielsweise auch handelsübliche Pflege- und/oder Poliermittel auf Basis von Wachsen oder Pasten verwendet werden. In diesen Pasten oder Wachsen können auch Tenside enthalten sein. Beispiele für erfindungsgemäß eingesetzbare Wachse sind natürliche Wachse (z.B. Montanwachs, Bienenwachs, Lanolin, Erdwachs, Paraffinwachse, Mikrowachs), chemisch modifizierte Wachse (z.B. hydriertes Jojobawachs) und synthetische Wachse (z.B. Polyalkylenwachse, Polyethylenglycolwachse).

Gegebenenfalls kann das erfindungsgemäße Überzugsmittel außerdem nanoskalige anorganische Feststoff-Teilchen mit einer Teilchengröße im Bereich von z.B. 1 bis 200 nm, vorzugsweise 5 bis 100 nm, (Nanopartikel) enthalten.

Die nanoskaligen anorganischen Feststoffteilchen, wie sie z.B. in der WO 93/06508 beschrieben sind, können aus beliebigen Materialien bestehen, vorzugsweise bestehen sie jedoch aus Metallen und insbesondere aus Metallverbindungen wie beispielsweise (gegebenenfalls hydratisierten) Oxiden wie ZnO, CdO, SiO₂, TiO₂, ZrO₂, CeO₂, SnO₂, Al₂O₃ (insbesondere Boehmit), In₂O₃, La₂O₃, Fe₂O₃, Cu₂O, Ta₂O₅, V₂O₅, MoO₃ oder WO₃; Chalkogeniden wie beispielsweise Sulfiden (z.B. CdS, ZnS, PbS und Ag₂S), Seleniden (z.B. GaSe, CdSe und ZnSe) und Telluriden (z.B. ZnTe oder CdTe), Halogeniden wie AgCl, AgBr, Agl, CuCI, CuBr, Cdl₂ und Pbl₂; Carbiden wie CdC₂ oder SiC; Arseniden wie AlAs, GaAs und GeAs; Antimoniden wie InSb; Nitriden wie BN, AIN, Si₃N₄ und Ti₃N₄; Phosphiden wie GaP, InP, Zn₃P₂ und Cd₃P₂; Phosphaten, Silikaten, Zirkonaten, Aluminaten, Stannaten und den entsprechenden Mischoxiden (z.B. solchen mit Perowskitstruktur wie BaTiO₃ und PbTiO₃). Die Nanopartikel können z.B. in Form von Pulvern oder Solen zugegeben werden.

Dem Überzugsmittel können gegebenenfalls noch übliche Hilfsmittel zugegeben werden, wie z.B. Färbemittel, Füllstoffe, Oxidationsinhibitoren, Verlaufsmittel, UV-Absorber und dergleichen. Weitere Beispiele für Hilfsmittel sind Antioxidantien, Konservierungsstoffe, Feuchthaltemittel, Polyphosphate, Lösungsvermittler, Farbund Duftstoffe.

Das Polykondensat (Komponente a) ist in dem erfindungsgemäß eingesetzten Überzugsmittel in einer Menge von 0,001 bis 100, bevorzugt 1 bis 10 Gew.%, enthalten. Das Trägermedium (Komponente b) ist in dem erfindungsgemäßen Überzugsmittel in einer Menge von 0 bis 99,999, bevorzugt 90 bis 99 Gew.%, enthalten. Die Nanopartikel (Komponente c) sind in dem erfindungsgemäßen Überzugsmittel in einer Menge von 0 bis 90, bevorzugt 0 bis 20 Gew.%, enthalten. Das Überzugsmittel kann bis zu 50 Gew.%, bevorzugt bis zu 20 Gew.%, Hilfsmittel enthalten.

Wenn das Trägermedium eine wäßrige Lösung ist, enthält diese typischerweise 0,001 bis 2 Gew.% Polykondensat. Wachspräparate enthalten typischerweise 0,1 bis 10 Gew.% Polykondensat.

Die Reihenfolge der Vereinigung der Komponenten ist beliebig. Die Komponente c) kann aber gegebenenfalls auch zumindest teilweise bereits bei der Herstellung der Komponente a) mit einer Vorstufe der Komponente a) vereinigt werden. Bei der Vorstufe handelt es sich z.B. um eine Mischung der hydrolysierbaren Verbindungen oder um teilweise hydrolysierte undloder kondensierte Produkte dieser hydrolysierbaren Verbindungen.

Das Überzugsmittel kann auf praktisch jedes Substrat aufgebracht werden. Beispiele dafür sind Metalle, Glas, Holz, Papier, Textilien, Teppiche, Keramik, Kunststoffe, aber auch Baustoffe wie (Natur)Steine, Estriche, Gipse, Putze, Betone, Zemente, Ziegel, poröse Baustoffe und Isolierwerkstoffe sowie Schüttgüter, Pulver, Granulate, etc. Als Beispiele für Metalle seien z.B. Kupfer, Aluminium, Messing, Eisen und Zink genannt. Unter den als Kunststoffen verwendeten Polymeren verdienen insbesondere transparente Polymere wie Polycarbonat, Polymethylmethacrylat, Polyacrylate und Polyethylenterephthalat Erwähnung, aber auch alle anderen Arten von technischen Duroplasten, Thermoplasten und Elastomeren sowie Folien. Natürlich eignen sich auch oberflächenbehandelte (z.B. lackierte oder sandgestrahlte) Substrate für die Behandlung mit dem erfindungsgemäßen Mittel, insbesondere lackierte Substrate wie Haushalts- und medizintechnische Geräte bis hin zu Zähnen oder Zahn-Prothesen.

Das Überzugsmittel kann auf jede übliche Weise auf das gegebenenfalls oberflächenbehandelte Substrat aufgetragen werden, z.B. durch Spritzen, Sprühen, Gießen, Streichen, (Elektro)tauchen, Rollen, Bürsten oder durch Flutbeschichtung, bevorzugt wird es jedoch durch einfaches Aufsprühen (z.B. wässrige Systeme in einer Autowaschanlage) oder Aufreiben mit einem Tuch oder Bausch (z.B. Wachspräparate) aufgetragen. Zur Entfaltung der Wirksamkeit sind keine weiteren Prozesse außer der Trocknung an Luft durchzuführen. Insbesondere ist es nicht notwendig, eine spezielle thermische oder photolytische Härtung durchzuführen.

Die Trocknung und, falls dies erforderlich ist, die Härtung des auf das Substrat aufgetragenen Überzugsmittels erfolgen bei Temperaturen unter 40°C, bevorzugt unter 30°C. Ganz besonders bevorzugt wird bei Raumtemperatur oder darunter, etwa bei 15 bis 25°C, getrocknet und gegebenenfalls gehärtet. Dabei ist auch keine spezielle Belichtung über ein Belichtungsgerät zur photokatalytischen Härtung (z.B. ein UV-Strahler) notwendig. Überaschenderweise wird trotz Fehlen einer solchen sonst üblichen thermischen und/oder photolytischen Behandlung ein widerstandsfähiger Überzug erhalten, der gute Substrathaftung besitzt.

Es ist damit möglich, Oberflächen von Substraten über einen einfachen, nachträglichen Anwendungsschritt durch eine Trocknung und gegebenenfalls Härtung schon bei Raumtemperatur schmutzabweisende Eigenschaften zu verleihen. Gegebenenfalls wird eine Härtung durch Sonnenlicht unterstützt; eine besondere Belichtungsvorrichtung zur photolytischen Härtung ist aber nicht erforderlich.

Es werden sehr dünne Filme erhalten, deren Trockenschichtdicke nicht mehr als 600 nm, bevorzugt nicht mehr als 500 nm, insbesondere 20 bis 200 nm, beträgt Die erfindungsgemäßen Überzüge haften auf polaren, aber auch auf unpolaren Oberflächen, wie lackierten Blechen, sehr gut. Aufgrund dieser guten Haftung werden mit derart dünnen Filmen selbst auf unpolaren Oberflächen sehr dauerhafte Filmüberzüge mit schmutzabweisenden Eigenschaften erhalten, die selbst nach mehrmaliger Reinigung oder Bewitterung noch wirken. Es handelt sich zwar um Überzüge, die durch äußere Einflüsse wie Reinigung oder Bewitterung im Laufe der Zeit abgetragen werden, jedoch ist ihre Dauerhaftigkeit gegenüber entsprechenden Überzügen nach dem Stand der Technik wesentlich verbessert.

Überraschenderweise konnten diese Eigenschaften nicht nur mit Lösemitteln als Trägermedium erhalten werden, sondern sogar mit Wachsen oder Pasten, z.B. handelsüblichen Polierwachsen, als Trägermedien konnten diese Effekte erzielt werden.

Die mit den erfindungsgemäßen Verfahren erhältlichen Überzüge zeichnen sind insbesondere dadurch aus, daß sie mechanisch widerstandsfähig sind und darüber hinaus eine Antihaftwirkung gegenüber den verschiedensten Materialien zeigen. Die Überzüge zeigen selbst auf Substraten mit unpolaren Oberflächen eine sehr gute Haftung. Das erfindungsgemäße Verfahren eignet sich insbesondere zur Behandlung von Glas (insbesondere wenn in den nicht ausgehärteten Zusammensetzungen noch größere Anteile an M-OH Gruppen vorhanden sind), Holz, Kunststoffen, Textilien, Baustoffen und Metallen (die gegebenenfalls in geeigneter Weise, z.B. durch Korona-Behandlung oder Lackierung vorbehandelt sein können), um schmutzwasser- und ölabweisende Oberflächen zu erhalten. Den beschichteten Substraten werden somit sowohl hydrophobe als auch oleophobe Eigenschaften verliehen. Bevorzugte Anwendungsgebiete sind lackierte Oberflächen, beispielsweise im Automobilbereich, oder Glas, z.B. die Behandlung von (Außen-) Spiegeln von Kraftfahrzeugen oder Windschutzscheiben, aber auch von Baustoffen, etwa zum Korrosionsschutz von Bauwerken oder Denkmälem.

Die folgenden Beispiele erläutern die Erfindung, ohne sie zu beschränken.

### Beispiel 1

20,8 g (0,1 Mol) Tetraethoxysilan (TEOS), 5,1 g (0,01 Mol) 1H,1H,2H,2H-Perfluorooctyltriethoxysilan (FTS) und 6 g Ethanol werden in einem Becherglas geeigneter Größe 5 Minuten gerührt. Danach werden unter starkem Rühren 4,24 g 30 gew%-ige Essigsäure zugesetzt. Das zunächst zweiphasige Reaktionsgemisch erwärmt sich einige Sekunden und wird unter Wärmeentwicklung einphasig. Nach einer Reaktionszeit von etwa 30 Minuten ist das System beschichtungsfähig. Die Beschichtung wird auf 10 x 10 cm Glassubstraten durch Aufreiben mit einem Baumwolltuch durchgeführt, so daß ein temporärer Überzug mit einer Schichtdicke von 140 nm erhalten wird. Der Überzug zeigt nach einer Trockenzeit von einigen Minuten bei Raumtemperatur einen Kontaktwinkel gegen Wasser von ca. 108° und gegen Hexadecan von ca. 66°, d.h. es sind sowohl hydrophobe wie auch oleophobe Effekte nachweisbar.

### Beispiel 2

12,4 g (0,05 mol) Methacrylpropyltrimethoxysilan (MPTS) und 2,55 g (0,005 mol) Tridecafluoro-1,1,2,2-tetrahydrooctyl-1-triethoxysilan (F-SILAN) (10 Mol% bzgl. MPTS) werden über Nacht mit 2,97 g (0,165 mol) 0,1 molarer Salzsäure vollstöchiometrisch vorhydrolysiert. Anschließend wird die Mischung mit 1,3 g (0,01 mol) Hydroxymethylmethacrylat (HEMA) und 0,45 g eines Photoinitiators (Irgacure®184 von Ciba) (3 Mol% bzgl. Doppelbindung) versetzt und gerührt.
a) Es wird eine alkoholische Lösung zubereitet, die aus 65 Gew.-% Isopropanol, 25 Gew.-% Butoxyethanol und 10 Gew.-% der oben beschriebenen Mischung besteht.
b) Ebenso wird eine Suspension hergestellt, die aus 80 Gew.-% käuflichem Poliermittel (DYO-Hartwachspolitur) und 20 Gew.-% der oben beschriebenen Mischung besteht.

Analog werden Systeme mit 20, 30, 40 und 50Mol% F-SILAN hergestellt. Oberflächen, die wie in Beispiel 1 mit diesen Systemen behandelt worden sind, zeigen gegenüber Wasser einen Kontaktwinkel von 91 bis 104°.

## Patentansprüche

1. Verfahren zur Herstellung von Überzügen auf Basis von fluorhaltigen Kondensaten, bei dem man ein Überzugsmittel enthaltend
a) 0,001 bis 100 Gew.% eines Polykondensats von einer oder mehreren hydrolysierbaren Verbindungen mindestens eines Elements M, ausgewählt aus den Hauptgruppen III bis V und/oder den Nebengruppen II bis IV des Periodensystems der Elemente, wobei zumindest ein Teil dieser Verbindungen neben hydrolysierbaren Gruppen A auch nicht hydrolysierbare kohlenstoffhaltige Gruppen B aufweist und das Gesamt-Molverhältnis von Gruppen A zu Gruppen B in den zugrundeliegenden monomeren Ausgangsverbindungen 100:1 bis 1:2 beträgt, wobei 0,1 bis 100 Mol-% der Gruppen B Gruppen B' sind, die durchschnittlich 5 bis 30 Fluoratome aufweisen, die an ein oder mehrere aliphatische Kohlenstoffatome gebunden sind, welche durch mindestens zwei Atome von M getrennt sind; und
b) 0 bis 99,999 Gew.% eines Trägermediums von flüssiger bis wachsartiger Konsistenz
auf ein Substrat aufträgt und bei Umgebungstemperatur (unter 40°C) unter Bildung eines Überzugs mit einer Trockenschichtdicke von nicht mehr als 600 nm trocknet.

2. Verfahren nach Anspruch 1, **dadurch gekennzeichnet, daß** das Überzugsmittel durch Sprühen, Streichen, Bürsten oder Aufreiben auf das Substrat aufgetragen wird.

3. Verfahren nach Anspruch 1 oder 2, **dadurch gekennzeichnet, daß** der Überzug eine Trockenschichtdicke von 20 bis 200 nm aufweist.

4. Verfahren nach einem der Ansprüche 1 bis 3, **dadurch gekennzeichnet, daß** in dem Überzugsmittel mindestens 30 Gew.-% Trägermedium enthalten sind.

5. Verfahren nach einem der Ansprüche 1 bis 4, **dadurch gekennzeichnet, daß** das Überzugsmittel zusätzlich bis zu 90 Gew.% nanoskalige anorganische Feststoffteilchen enthält.

6. Verfahren nach einem der Ansprüche 1 bis 5, **dadurch gekennzeichnet, daß** das Trägermedium ausgewählt ist aus Lösungsmitteln, Ölen, Cremes, Salben, Pasten, Wachsen oder Mischungen davon.

7. Verfahren nach einem der Ansprüche 1 bis 6, **dadurch gekennzeichnet, daß** das Substrat ausgewählt ist aus Glas, Holz, Kunststoffen, Textilien, Baustoffen, Metallen und lackierten Substraten.

8. Verfahren nach einem der Ansprüche 1 bis 7, **dadurch gekennzeichnet, daß** das Trägermedium ein Wachs ist, das 0,1 bis 10 Gew.% Polykondensat enthält.

9. Verfahren nach einem der Ansprüche 1 bis 7, **dadurch gekennzeichnet, daß** das Trägermedium eine wäßrige Lösung ist, die 0,001 bis 2 Gew.% Polykondensat enthält.

## Claims

1. Process for the production of coatings based on fluorine-containing condensates, in which a coating composition comprising
a) from 0.001 to 100% by weight of a polycondensate of one or more hydrolysable compounds of at least one element M selected from main groups III to V and/or sub-groups II to IV of the Periodic Table of the Elements, with at least part of these compounds containing non-hydrolysable carbon-containing groups B in addition to hydrolysable groups A, and the overall molar ratio of groups A to groups B in the monomeric starting compounds being from 100:1 to 1:2, where from 0.1 to 100 mol% of the groups B are groups B' which contain on average from 5 to 30 fluorine atoms which are bonded to one or more aliphatic carbon atoms which are separated from M by at least two atoms; and
b) from 0 to 99.999% by weight of a carrier medium having a liquid to wax-like consistency
is applied to a substrate and dried at ambient temperature (below 40°C) with formation of a coating having a dry layer thickness of not greater than 600 nm.

2. Process according to Claim 1, **characterized in that** the coating composition is applied to the substrate by spraying, spreading, brushing or rubbing.

3. Process according to Claim 1 or 2, **characterized in that** the coating has a dry layer thickness of from 20 to 200 nm.

4. Process according to one of Claims 1 to 3, **characterized in that** the coating composition comprises at least 30% by weight of carrier medium.

5. Process according to one of Claims 1 to 4, **characterized in that** the coating composition additionally comprises up to 90% by weight of nanoscale inorganic solid particles.

6. Process according to one of Claims 1 to 5, **characterized in that** the carrier medium is selected from solvents, oils, creams, ointments, pastes, waxes or mixtures thereof.

7. Process according to one of Claims 1 to 6, **characterized in that** the substrate is selected from glass, wood, plastics, textiles, building materials, metals and painted substrates.

8. Process according to one of Claims 1 to 7, **characterized in that** the carrier medium is a wax comprising from 0.1 to 10% by weight of polycondensate.

9. Process according to one of Claims 1 to 7, **characterized in that** the carrier medium is an aqueous solution comprising from 0.001 to 2% by weight of polycondensate.

## Revendications

1. Procédé pour la production de revêtements à base de produits de condensation fluorés, dans lequel on applique sur un subjectile une composition de revêtement contenant
a) de 0,001 à 100 % en poids d'un produit de polycondensation d'un ou plusieurs composés hydrolysables d'au moins un élément M choisi dans les groupes IIIA à VA et/ou dans les groupes IIB à IVB de la classification périodique des éléments, au moins une partie de ces composés comportant, outre des groupes hydrolysables A, également des groupes carbonés B non hydrolysables et le rapport molaire total des groupes A aux groupes B dans les composés de départ monomères de base valant de 100:1 à 1:2, 0,1 à 100 % en moles des groupes B étant des groupes B' qui comportent en moyenne de 5 à 30 atomes de fluor qui sont liés à un ou plusieurs atomes de carbone aliphatiques séparés par au moins deux atomes de M ; et
b) de 0 à 99,999 % en poids d'un milieu de support ayant une consistance liquide à cireuse
et on la sèche à la température ambiante (inférieure à 40°C) avec formation d'un revêtement ayant une épaisseur de couche sèche d'excédant pas 600 nm.

2. Procédé selon la revendication 1, **caractérisé en ce que** la composition de revêtement est appliquée sur le subjectile par pistolage, enduction au pinceau, enduction à la brosse ou frottage.

3. Procédé selon la revendication 1 ou 2, **caractérisé en ce que** le revêtement présente une épaisseur de couche sèche de 20 à 200 nm.

4. Procédé selon l'une quelconque des revendications 1 à 3, **caractérisé en ce qu'**au moins 30 % en poids du milieu de support sont contenus dans .la composition de revêtement.

5. Procédé selon l'une quelconque des revendications 1 à 4, **caractérisé en ce que** la composition de revêtement contient en outre jusqu'à 90 % en poids de nanoparticules de matière solide minérale.

6. Procédé selon l'une quelconque des revendications 1 à 5, **caractérisé en ce que** le milieu de support est choisi parmi des solvants, des huiles, des crèmes, des pommades, des pâtes, des cires ou des mélanges de ceux-ci.

7. Procédé selon l'une quelconque des revendications 1 à 6, **caractérisé en ce que** le subjectile est choisi parmi le verre, le bois, des matières plastiques, des textiles, des matériaux de construction, des métaux et des subjectiles peints.

8. Procédé selon l'une quelconque des revendications 1 à 7, **caractérisé en ce que** le milieu de support est une cire qui contient de 0,1 10 % en poids de produit de polycondensation.

9. Procédé selon l'une quelconque des revendications 1 à 7, **caractérisé en ce que** le milieu de support est une solution aqueuse qui contient de 0,001 à 2 % en poids de produit de polycondensation.
